# EUROPÄISCHE PATENTSCHRIFT

(11) **EP 1 034 475 B1**
(45) Veröffentlichungstag und Bekanntmachung des Hinweises auf die Patenterteilung: **30.05.2001**
(21) Anmeldenummer: 97949889.6
(22) Anmeldetag: 07.11.1997
(51) Int. Cl.: G06F 11/00

(54) **VERFAHREN ZUM TESTEN VON SYSTEMKOMPONENTEN EINES OBJEKTORIENTIERTEN PROGRAMMS**
METHOD FOR TESTING THE SYSTEM COMPONENTS IN AN OBJECT-ORIENTED PROGRAM
PROCEDE POUR TESTER LES COMPOSANTES D'UN PROGRAMME ORIENTE OBJETS

(30) Priorität: 04.12.1996 DE 19650293
(43) Veröffentlichungstag der Anmeldung: 13.09.2000
(73) Patentinhaber: SIEMENS AKTIENGESELLSCHAFT, 80333 München (DE)
(72) Erfinder: GLUNZ, Wolfgang, D-81827 München (DE)
(86) Internationale Anmeldenummer: DE9702609
(87) Internationale Veröffentlichungsnummer: WO9825204

(56) Entgegenhaltungen:
- EP-A- 0 679 004
- WO-A-94/14117
- DE-A- 4 416 704
- MCGREGOR J D ET AL: "INTEGRATED OBJECT-ORIENTED TESTING AND DEVELOPMENT PROCESSES " COMMUNICATIONS OF THE ASSOCIATION FOR COMPUTING MACHINERY, Bd. 37, Nr. 9, 1.September 1994, NEW YORK, US, Seiten 59-77, XP000485273

## Beschreibung

Die Erfindung betrifft ein Verfahren zum Testen von Systemkomponenten eines objektorientierten Programms.

In [W. Archert: "Objektorientiert analysieren - Ein Überblick der wichtigsten Methoden", Elektronik 3/96, Seiten 80-86] werden Kriterien für den Vergleich objektorientierter Methoden, insbesondere Vergleichsmethoden unterschiedlicher Darstellungsmöglichkeiten eines objektorientierten Programms erläutert. Weiterhin werden Vorteile der objektorientierten Programmierung dargestellt, insbesondere Modularität und Portabilität.

Bei der Entwicklung eines Softwaresystems ist es sinnvoll, vor dem Test des Gesamtsystems die einzelnen Systemkomponenten isoliert zu testen. Systemkomponenten sind z.B. einzelne Programmodule oder - bei einer objektorientierten Entwicklung - Klassen. Beim Klassen- oder Modultest tritt häufig das Problem auf, daß eine Testeinheit (Klasse bzw. Modul) stark von anderen Testeinheiten abhängig ist. Solche Abhängigkeiten ergeben sich z.B. aus der gegenseitigen Benutzung von Funktionen (oder bei der Verwendung von Klassen: Methoden). Dies hat aber zur Folge, daß zum Test einer Testeinheit A alle anderen Testeinheiten U, die von A benutzt werden (direkt oder auch indirekt, weil z.B. U wiederum andere Einheiten benutzt) bereits vorhanden sein müssen.

Die der Erfindung zugrundeliegende Aufgabe besteht darin, das Testen von Testeinheiten zu vereinfachen und zu beschleunigen.

Die Aufgabe wird durch das Verfahren gemäß den Merkmalen des Patentanspruchs 1 gelöst. Die Merkmale des Oberbegriffs des Patentanspruchs 1 sind aus Dokument DE-A-44 16 704 bekannt.

Um dieses Problem zu umgehen, bietet es sich an, für die von der Testeinheit A aus anderen Testeinheiten U benutzten Funktionen und/oder Methoden Ersatzfunktionen mit einer Dummyfunktionalität zu erstellen. Solche Ersatzfunktionen werden auch "Stubs" genannt. Auch wenn eine Funktion/Methode bereits implementiert ist, kann es sinnvoll sein, für den Test anderer Funktionen/Methoden diese durch einen Stub zu ersetzen. Hierdurch kann beispielsweise die Komplexität des Testrahmens klein gehalten werden.

Die Erfindung beschreibt die automatische Generierung eines minimalen Satzes von vollständigen Ersatzfunktionen (Stubs) für den Einsatz beim Klassen- und/oder Modultest. Damit ist gemeint, daß alle Funktionen/Methoden, die in dem Softwaresystem deklariert, deren Implementierung aber entweder noch nicht vorhanden ist oder aber aus Komplexitätsgründen nicht benutzt werden kann, automatisch als Ersatzfunktionen (Stubs) implementiert werden. Dabei wird darauf geachtet, daß der Rückgabeparameter und auch die Übergabeparameter der Funktion/Methode äquivalent zur ursprünglichen Funktion/Methode auch für die Ersatzfunktion generiert werden. Für die Implementierung der Ersatzfunktion wird lokal in der Funktion/Methode eine Testrahmenklasse instanziiert. Diese Testrahmenklasse kapselt einen Zustandsautomaten, der definiert wird durch die Parameter (sowohl Rückgabe- als auch Übergabeparameter) der Funktion, die durch den Stub ersetzt wird. Sollen innerhalb des Stubs weitergehend logische Operationen durchgeführt werden, so können diese manuell ergänzt werden.

Beginnt das Softwaresystem nun den Testlauf, wird in dem Stub entsprechend dem voreingestellten Modus der Testrahmenklasse verzweigt. Der Modus kann z.B. sein, daß an einem Kommandoprompt interaktiv Kommandos entsprechend einem Befehlssatz eines in der Testrahmenklasse integrierten Interpreters zugelassen werden, oder daß in der Ersatzfunktion eine Kommandodatei ausgeführt wird, die beispielsweise Ausgaben entsprechend den Kommandos der Kommandodatei erzeugt. Nach der Interaktion bzw. der Ausführung der Kommandodatei wird aus der Ersatzfunktion in das aufrufende Modul zurückgesprungen. Eine weitere Ersatzfunktion stellt, sobald sie aufgerufen wurde, dieselbe Funktionalität mit den ihr eigenen Parametern zur Verfügung. Somit können für alle Ersatzfunktionen spezifische Tests mit der einen Testrahmenklasse durchgeführt werden. Die Kapselung der Testrahmenklasse als eigener Zustandsautomat ermöglicht die flexible Verwendung in jeder Ersatzfunktion. Die für die Ersatzfunktion instantiierte Testrahmenklasse wird mit den Parametern (sowohl Übergabe- als auch Rückgabeparameter) initialisiert. Somit können in der Testrahmenklasse typspezifische Operationen definiert werden, die interaktiv oder von einer Kommandodatei aufgerufen werden,

Eine vorteilhafte Weiterbildung des erfindungsgemäßen Verfahrens besteht in der interaktiven Verwendung der Testrahmenklasse. Diese Interaktion stellt einen Funktionsumfang eines integrierten Debuggers mit dem in der Testrahmenklasse definierten Befehlssatz dar. Somit können, wie bei einem Debugger, interaktiv Kommandos auf den in der aktuellen Funktion sichtbaren Parametern durchgeführt werden.

Weiterbildungen des erfindungsgemäßen Verfahrens ergeben sich aus den abhängigen Ansprüchen.

Die Erfindung wird anhand eines Ausführungsbeispiels, welches in den Figuren dargestellt ist, weiter erläutert.

Es zeigen
- Fig.1: ein Ablaufdiagramm, in dem die einzelnen Verfahrensschritte dargestellt sind,
- Fig.2: eine Skizze, die eine beispielhafte Ausprägung des erfindungsgemäßen Verfahrens enthält,

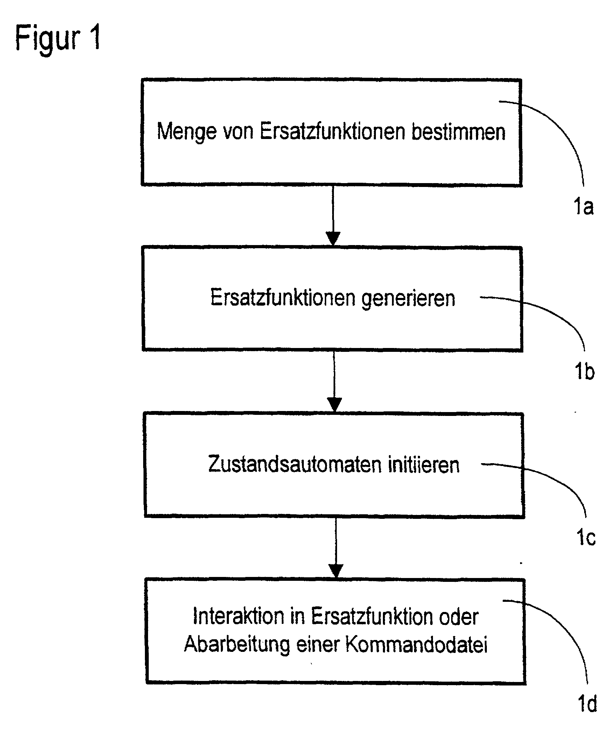

In Fig.1 sind die einzelnen Verfahrensschritte des erfindungsgemäßen Verfahrens dargestellt. In einem ersten Schritt la wird die Menge der Ersatzfunktionen festgelegt. So können beispielsweise je nach Art des Testdurchlaufs entweder für alle Methoden eines objektorientierten Programms, die noch nicht implementiert sind, automatisch Ersatzfunktionen kreiert werden, oder es kann eine Verschachtelung von Methodenaufrufen aufgelöst werden dadurch, daß in der Aufrufhierarchie eine beliebig gewählte Methode als Ersatzfunktion implementiert wird. Somit erhält man eine Menge von Ersatzfunktionen, die insoweit vollständig ist, als zumindest alle noch nicht implementierten Funktionen durch Ersatzfunktionen dargestellt werden. Die automatische Generierung von Ersatzfunktionen berücksichtigt sowohl den Rückgabeparameter als auch die Aufrufparameter der zu ersetzenden Funktion (siehe Schritt 1b). Um eine möglichst hohe Flexibilität und Wiederverwendbarkeit zu erhalten, kann eine allgemeine Testrahmenklasse definiert werden, die für jede Ersatzfunktion einen Zustandsautomaten implementiert, der zum einen von dem Befehlssatz des in der Testrahmenklasse integrierten Interpreters abhängt, zum anderen durch die Menge der Parameter der Ersatzfunktion oder, falls die Funktion eine Methode einer Klasse ist, durch die zur Methode gehörende Klasse bestimmt ist. Die Testrahmenklasse verfügt für alle Ersatzfunktionen über den gleichen Befehlssatz, der Zugriff auf die ersatzfunktionsspezifischen Parameter (sowohl Übergabe- als Rückgabeparameter) erlaubt. Weiterhin kann die Funktionalität der Ersatzfunktion dahingehend ergänzt werden, daß die Testrahmenklasse, nachdem alle ersatzfunktionsspezifischen Parameter definiert wurden, sowohl interaktiv betrieben werden kann als auch, daß eigenständig eine Kommandodatei abgearbeitet werden kann. Dies entspricht der Initiierung des Zustandsautomaten (Schritt 1c). Interaktion bedeutet hierbei, daß während des Testlaufes, sobald die jeweilige Ersatzfunktion aufgerufen wird, der Benutzer beispielsweise an seinem Bildschirm einen Kommandoprompt sieht, an dem er Eingaben gemäß dem in der Testrahmenklasse vorgegebenen Befehlssatz machen kann. Dieser Vorgang kann auch automatisiert werden, indem mehrere solcher vom Zustandsautomaten der Testrahmenklasse erlaubten Befehle in einer Kommandodatei zusammengefaßt werden, die anstelle der Interaktion ausgeführt wird. Weiterhin ist es möglich, in einer Ersatzfunktion Ausführung einer Kommandodatei und Umschalten in den Modus, der Interaktion mit dem Benutzer erwartet, in beliebiger Reihenfolge anzuordnen. So können Kommandodateien exklusiv in Ersatzfunktionen ablaufen, oder als Ergänzung zwischen Interaktionen dienen (Schritt 1d).

Das Verfahren zeichnet sich dadurch aus, daß nicht für jeden Testdurchlauf ein erneutes Compilieren und Linken erforderlich ist. Weiterhin können Testfälle einfach automatisiert werden, indem die oben beschriebenen Kommandodateien verwendet werden.

Eine vorteilhafte Weiterbildung des erfindungsgemäßen Verfahrens ist die Verwendung der Testrahmenklasse in beliebigen Modulen. Da alle notwendigen Parameter der Testrahmenklasse mitgeteilt werden, und da die Stelle zur Interaktion im Programmcode individuell festgelegt werden kann, ist an der Stelle im Programmcode, an der die Interaktion zugelassen wird, ein integriertes Debugging mit Sicht auf die aktuell gültigen Variablen möglich. So können mit einfachen Mitteln beispielsweise Operationen auf Typen, die komplexe Datenstrukturen enthalten, durchgeführt werden. Die interaktiv erlaubten Befehle können individuell in der Testrahmenklasse implementiert werden. Durch Kapselung der Funktionalität zur Ausführung bestimmter Befehle in einer Testrahmenklasse ist es möglich, für alle Ersatzfunktionen durch einfache Instantiierung der Testrahmenklasse in der jeweiligen Ersatzfunktion die Funktionalität der Testrahmenklasse bereitzustellen.

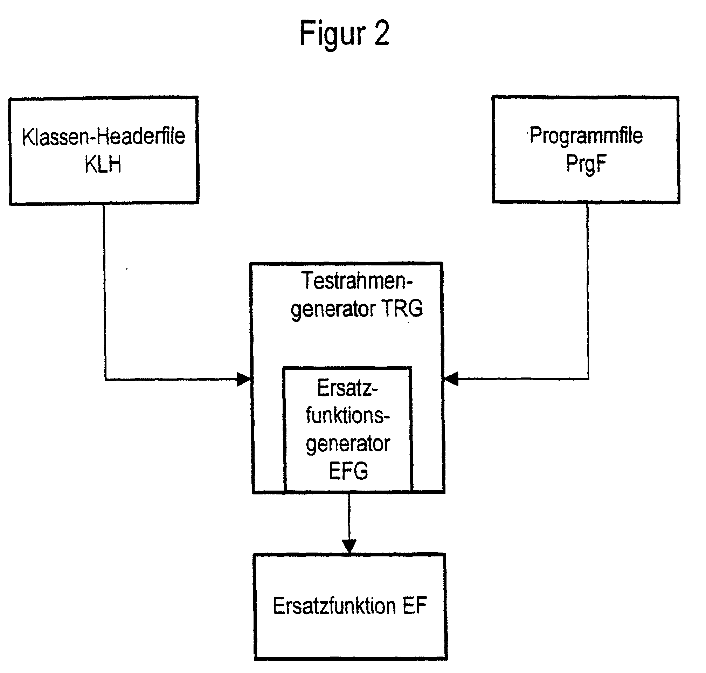

Fig.2 zeigt eine beispielhafte Ausprägung des erfindungsgemäßen Verfahrens. Eine objektorientierte Modellierung kann beispielsweise unter der Programmiersprache C++ erfolgen. Zweckmäßigerweise werden die Klassen der Systemsoftware in entsprechenden Klassen-Headerfiles KLH deklariert. Die Methoden der jeweiligen Klassen werden in den zugehörigen Programmfiles PrgF (z.B. Files mit den Endungen .cpp oder .c) implementiert. Sind nun bestimmte Methoden innerhalb der Klassen-Headerfiles KLH deklariert, fehlt aber die zugehörige konkrete Implementierung innerhalb der Programmfiles PrgF, so wird der Übersetzer eine Fehlermeldung ausgeben, die anzeigt, daß die Implementierung der deklarierten Methode nicht gefunden werden konnte (z.B. Fehlermeldung: "Unresolved Externals"). Aus dieser Information über Methoden, deren Implementierung entweder noch nicht vorhanden ist oder aber nicht verwendet werden soll, erzeugt ein Testrahmengenerator TRG über einen Ersatzfunktionengenerator EFG entsprechend Ersatzfunktionen EF. Dazu sucht der Testrahmengenerator TRG die passende Deklaration und bestimmt daraus die Rückgabe- und Aufrufparameter. Die gleichen Aufruf- und Rückgabeparameter erhält auch die Ersatzfunktion EF. Um individuelle Testläufe innerhalb der Ersatzfunktion EF zuzulassen, wird eine Testrahmenklasse in dieser Eratzfunktion instantiiert. Die Testrahmenklasse verfügt über eigene Methoden, die es erlauben, Übergabe- und Rückgabeparameter der Ersatzfunktion EF der instantiierten Testrahmenklasse mitzuteilen. Weiterhir kann innerhalb der Ersatzfunktion EF ein Modus vereinbart werden, der beim Aufrufen dieser Ersatzfunktion EF entweder Interaktion an einem Kommandoprompt oder das Ausführen eines Kommandoskripts erlaubt. Wird beispielsweise der Modus Interaktion gewählt, so kann der Benutzer an einem Kommandoprompt unterschiedliche Befehle eingeben, die innerhalb der Testrahmenklasse vereinbart sind. Dies entspricht einer Art Interpreter, der einen durch die Testrahmenklasse definierten über einen bestimmten Befehlssatz verfügenden Zustandsautomaten mit den Parametern der ersetzten Funktion darstellt.

Es ist vorteilhaft, Funktionalität, die der ersetzten Funktion innewohnt, entsprechend den individuellen Bedürfnissen in der Ersatzfunktion EF nachzubilden. Die Kapselung des Interpreters in einer eigenen Testrahmenklasse, beispielsweise in der Sprache C++, hat den Vorteil, daß der individuell definierte Befehlssatz des in der Testrahmenklasse vereinbarten Zustandsautomaten für alle Instanzen dieser Testrahmenklasse in jeder Ersatzfunktion EF zur Verfügung steht. Die einzig notwendige Aktivität, um den Zustandsautomaten in der Testrahmenklasse sinnvoll zu nutzen, ist die Definition der ersatzfunktionsabhängigen Parameter für den Zustandsautomaten. Dies wird automatisch vom Ersatzfuntkionengenerator EFG durchgeführt. Man erhält ein universelles und für verschiedene Testfälle einfach zu nutzendes Werkzeug, das entweder manuell (im interaktiven Modus) oder automatisch (durch Kommandodateien) oder beides benutzt werden kann.

## Patentansprüche

1. Verfahren zum Testen von Systemkomponenten eines objektorientierten Programms, wobei die Systemkomponenten Klassen und/oder Module des objektorientierten Programms aufweisen,
a) bei dem Abhängigkeiten von Methoden und/oder Funktionen aufgelöst werden dadurch, daß eine aufgerufene Methode oder Funktion durch eine Ersatzfunktion ersetzt wird, dadurch gekennzeichnet daß
b) die Ersatzfunktion durch einen Zustandsautomaten dargestellt wird, wobei der Zustandsautomat in einer eigenen Klasse gekapselt ist und interaktiv eine Eingabe von Kommandos zuläßt,
c) die zu ersetzende Methoden/Funktionen automatisch als Ersatzfunktionen generiert werden, wobei die jeweilig erzeugte Ersatzfunktion gleiche Aufrufparameter und einen gleichen Rückgabewert wie die ersetzte Methode/Funktion aufweist.

2. Verfahren nach Anspruch 1,
bei dem die automatisch generierte Ersatzfunktion als integrierter Debugger benutzt wird, indem innerhalb der Ersatzfunktion interaktiv Kommandos eingegeben werden.

## Claims

1. Method for testing system components of an object-oriented program, the system components having classes and/or modules of the object-oriented program,
a) in which dependencies of methods and/or functions are resolved by replacing a retrieved method or function with a replacement function, characterized in that
b) the replacement function is provided by an automatic state machine, the automatic state machine being encased in an individual class and interactively permitting the input of commands,
c) the methods/functions to be replaced are automatically generated as replacement functions, the replacement function produced in each case having the same retrieval parameters and the same return value as the method/function replaced.

2. Method according to Claim 1,
in which the automatically generated replacement function is used as integrated debugger as a result of commands being input interactively within the replacement function.

## Revendications

1. Procédé de test de composantes de système d'un programme orienté objet, les composantes de système comportant des classes et/ou des modules du programme orienté objet,
a) dans lequel on résout des dépendances de procédés et/ou de fonctions par le fait que l'on remplace un procédé ou une fonction appelé(e) par une fonction de remplacement, caractérisé en ce que
b) la fonction de remplacement est représentée par un automate d'état, l'automate d'état étant mis dans une classe propre et permettant de manière interactive une entrée de commande,
c) les procédés/fonctions à remplacer sont généré(e)s automatiquement comme fonctions de remplacement, la fonction de remplacement produite de manière associée ayant de mêmes paramètres d'appel et une même valeur de renvoi que le procédé/la fonction remplacé(e).

2. Procédé suivant la revendication 1, dans lequel on utilise la fonction de remplacement générée automatiquement comme débuggeur intégré en entrant à l'intérieur de la fonction de remplacement des commandes de manière interactive.
